# EUROPEAN PATENT APPLICATION

(11) **EP 1 318 676 A1**
(43) Date of publication of application: **11.06.2003**
(21) Application number: 02005849.1
(22) Date of filing: 14.03.2002
(51) Int. Cl.: H04N 7/16, H04N 7/173, H04H 9/00, H04N 5/00

(54) **Measurement of television audience by transmitting information in the vertical blanking interval**

(30) Priority: 10.12.2001 EP 01403184
(71) Applicant: Thomson Licensing S.A., 92100 Boulogne-Billancourt (FR)
(72) Inventor: Schaefer, Ralf, 35690 Acigné (FR); Letellier, Philippe, 35760 St Grégoire (FR)
(74) Representative: Berthier, Karine

(57) **Abstract**

The invention relates to a television system including an audience measurement device connected to a television set having a number of selectable service and a digital data receiver. The digital receiver contains an unit for detecting which service has been selected for viewing on the television set. The audience measurement device has a memory in which the viewed service identifier are stored. The digital data receiver transmits the service identifier in the Vertical Blanking Interval to the audience measurement device.

## Description

This invention relates to the field of the broadcast television and here specifically to building systems that are capable of performing measurements of audiences of television services.

Many companies are interested today to get feedback how their service or product is perceived by the user. This is true for clients of advertising companies who wants to know whether the advertisement contributed to a better knowledge of their product. It is equally true for the television business. Broadcasters, network operators and content providers want to know how many people watched the Saturday evening game show running at prime time. These are just a few examples for public opinion polls.

In the beginnings of the television era it was just important to get a feedback how big was the audience for a certain television event. The information was collected manually, the process was therefore slow and expensive.

Today we have a large quantity of television services and broadcasters, we have many companies wanting to collect user information, we have a large quantity of television viewers, data collection and evaluation needs to be short and of course the process should be inexpensive and easy to handle.

Today more is required to get information back from users and the tendency is towards building user profiles. Building a user profile is not just observing which television event has been watched at prime time on Saturday evening. It could mean to observe on/off time of television sets and video recorders, which services and events have been watched and recorded over the period of a month, how many times did the user zap during an advertisement and so on.

Some requirements for such a television based user data collection system can be listed:
- The system shall observe what is being viewed in the household and what is being recorded
- The system described here applies to analogue and digital television services. Interactive services are described in another proposal.
- The system shall observe a maximum of parameters such as
   o On-off time of television sets and connected audiovisual devices (analogues and digital set top boxes)
   o Zapping and recording behaviour. At which time did the user zap to a certain service ? When did the user start and stop a recording on which service ? Such actions shall be captured with time stamps with the resolution of one second.
- The system shall be inexpensive and easy to install.

The intervention of the broadcaster/content provider should be reduced to a minimum and it shall work with existing audiovisual devices such as television sets, VCRs, analogue-and digital set top boxes.

The technical problem consists of finding an inexpensive solution for acquiring data of television viewers with a minimum modification of the broadcast chain and user equipment.

A typical television viewer equipment consists of:
- Television set (low end to high end), mandatory
- VCR (low end to high end)
- Digital STB
- Analogue STB

Of course, the equipment of the user can as well be a subset of it. Public opinion polls usually consider a great variation of the population, from people earning little money to the upper class.

There are a demanding companies that want to capture data about television viewers. These collected data can either concern directly the product of the company so as to get a feedback about the product (product can be a TV event, an advertisement, ...). Sometimes it is as well interesting to collect information about competitors products, for example if M6 wants to collect information about the success of a TV show produced by TF1.

There are companies or institutes that are specialised in opinion polls. These companies choose a representative group of the population, so as to perform the poll with this chosen subset. In the case of television opinion polls, the institute usually installs a special equipment in the home of the observed television viewers. Usual opinion polls are conducted with 300 to 500 observed households. This can vary from country to country (depends on number of inhabitants) and from project to project.

There are companies that develop and manufacture the observation equipment that is installed in the homes of the observed TV viewers. Such products are sold in small numbers, as we have seen there are often 300 to 500 devices. Producing equipment in small quantities means a high price for the equipment.

The selected television viewers their homes must not be disturbed in their usual habits by the observation equipment.

The goal of this patent is to describe an observation mechanism for public opinion polls that is based on existing TV equipment such as television sets, VCRs, analogue and digital set top boxes. Only a specific Observation Box (further called O-Box) is required so as to perform public opinion polls for television services.

The subject of the invention is a television system including an audience measurement device connected to a television set having a number of selectable service and a digital data receiver, the digital receiver containing an unit for detecting which service has been selected for viewing on the television set, the audience measurement device having a memory in which the viewed service identifier are stored, characterised in that the digital data receiver transmits the service identifier in the Vertical Blanking Interval to the audience measurement device.

The present invention has the following advantages :
- Measurement of television audiences by means of CNI codes transported in the VBI
- Measurement of television audiences by means of DVB triples, seen as a complement for digital television services
- Transmission of DVB triples in the VBI so as to send it to the measurement apparatus
- Recognition of on/standby state of television sets by observing the composite output signal of the EURO-AV connector
- Recognition of on/standby state of VCRs by observing the composite output signal of the EURO-AV connector
- Recognition of recording state of VCRs by observing the composite output signal of the EURO-AV connector and the slow switching signal on the EURO-AV connector (PIN 8)
- Television audience measurement system that uses only EUROAV connections for system observation
- Television audience measurement by using the AV-Link protocol.AV-Link is described in the standards EN 50049-1 and EN50157-2

Other characteristics and advantages of the invention will become apparent with the description of some of its embodiments, this description being given with reference to the drawings appended hereto, in which:
- Figure 1 diagrammatically represents a system comprising a control device according to an example of a circuit useable for a such control,
- Figure 2 represents a example of a control device according to an example of realization.

This invention covers the O-Box and how the EURO-AV signals are used for public opinion polls in the television environment.

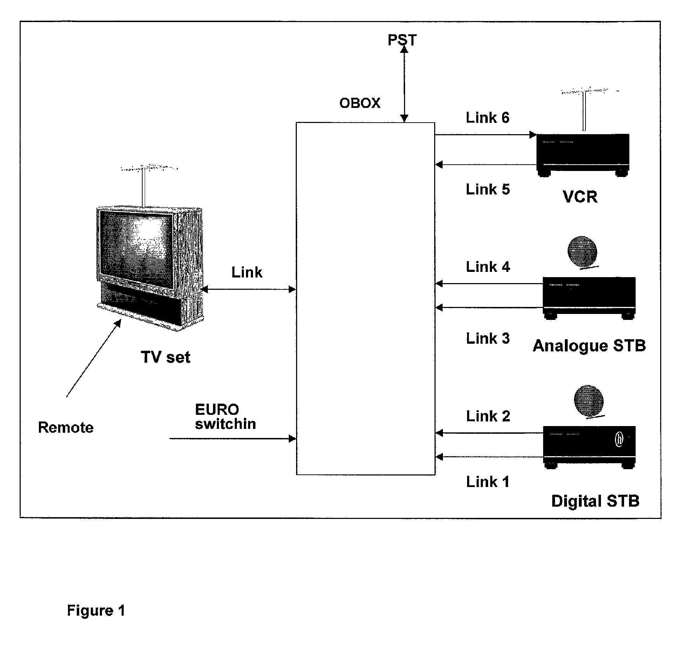

Figure 1 shows the typical set up for the operation of the O-Box. In this configuration there is the television set as the viewing device. The source of the viewing device can either be the channels received via the terrestrial antenna or it can be one of the source devices connected to the O-Box.

In this example the analogue terrestrial antenna is connected to the VCR and to the TV set. The other networks (satellite, terrestrial or cable) are directly connected to the digital set top box. All other relevant connection are done through EURO-AV connections.

This is just an example set up. It is important for the measurement apparatus that the O-Box appears as the central switching equipment between the devices.

The requirements for the measurement system are :
- The measurement shall require a minimum of modifications from the broadcaster side
- The measurement system shall work with off the shelvesequipment such as television sets, VCRs, analogue and digital STBs
- The measurement system is connected via EUROAV cables, where the O-Box is the central switch board
- The measurement system shall detect the actions listed in 0 and 0 with the precision of one second.

The requirements for the television viewing measurement are :
- Television set on/standby
- Zapping to a service (analogue terrestrial, analogue satellite , digital satellite, VCR)

The requirements for the VCR recording measurement are :
- VCR on/standby
- VCR recording start time, stop time and recorded service

The television set is an off the shelves device with minimum one CENELEC EURO-A/V connector. For this connector (Link 7) we make the following assumption. The Composite video out (connector Pin 19) is the video signal selected by the tuner of the television set. The composite signal contains the VBI data sent by the broadcaster. When the television set isswitched on, it contains the composite signal of the television set tuner. When the television set is in standby mode, there is no composite signal on this connector.

This mechanism is true for low end and high end television sets.

Detection of viewed television services coming from the terrestrial analogue television tuner is done via information that is inserted in the VBI by the broadcaster. This information is called CNI (Country and Network Identification) codes.

If the TV set supports the AV-Link protocol, this protocol can as well be used for getting information about the television set. AV-Link is described in the standards EN 50049-1 and EN50157-2.

The VCR (Video Cassette Recorder) is an off the shelves device with two CENELEC EURO-AV connectors. One is routed via the O-Box to the television set and the other one is used for routing a recording signal from one of the source devices (STBs). For Link 5, we make the following assumption:
- PIN 19: Composite video out is the video signal selected by the tuner of the video recorder. The composite signal contains the VBI data sent by the broadcaster. When the video recorder if switched on it contains the composite signal. When the video recorder is in standby mode, there is no composite signal on this connecbr.
- PIN 8: When the voltage is 0V the video recorder is either in standby mode or it is in recording mode. If the voltage is between 5V and 12V, the video recorder is a potential content source for the television set.

For Link 6 we make the following assumptions:
- PIN 20 contains a composite signal that can be used for recording.

Detection of recorded television services coming from the terrestrial analogue VCR tuner is done via information that is inserted in the VBI by the broadcaster. This information is called CNI (Country and Network Identification) codes.

If the VCR supports the AV-Link protocol, this protocol can as well be used for getting information about the VCR. AV-Link is described in the standards EN 50049-1 and EN50157-2.

The analogue STB (Set Top Box) is an off the shelves device with two CENELEC EURO-AV connectors. One is routed via the O-Box to the television set and the other one is used for routing a composite signal to the VCR.

For Link 3 and Link 4 we make the following assumption:
- PIN 19: Composite video out is the video signal selected by the tuner of the analogue STB. The composite signal contains the VBI data sent by the broadcaster. When the analogue STB is switched on it contains the composite signal. When the analogue STB is in standby mode, there is no composite signal on this connector.

Detection of viewed television services coming from the analogue STB is done via information that is inserted in the VBI by the broadcaster. This information is called CNI (Country and Network Identification) codes.

### Description of the digital STB (Set Top Box)

As described above, the channel (or service) detection mechanism is based on the CNI codes which are sent via VBI data. Public and private free-to-air broadcasters in Germany transmit the teletext data on the digital transmission chain using the standard EN 300 472, so the CNI codes are transmitted in the composite signal coming out of the digital STB.

Some services are only broadcast on digital networks and therefore do usually not transmit CNI code in the VBI. There are two solutions to get the O-Box working with such a digital STB:

The broadcaster who wants to perform television service audience measurements inserts the CNI codes in the VBI signal. That means the broadcaster adds a very low bandwidth PES stream so as to convey teletext data including the CNI information. Such PES streams are specified in EN 300 472. The data rate is very low because only one teletext line has to be inserted and a repetition rate of 1 Hz should be sufficient. With such a solution, off the shelves digital STBs can be used.

If the broadcaster is not able to insert such CNI codes in the digital stream, or the broadcaster wants to measure audiences of competitors, the mechanism with the CNI codes does not work. In this case the digital STB needs to include a specific code module. After each service selection, this code module sends the DVB triple (consisting of original network ID, transport stream ID and service ID) to a communication port of the digital STB. This communication port can be any appropriate port, like a serial port, but the better concept is to insert this DVB triple in the VBI data. Sending the information via the VBI does not need any specific cabling to the O-Box and keeps the installation of the audience measurement system simple.

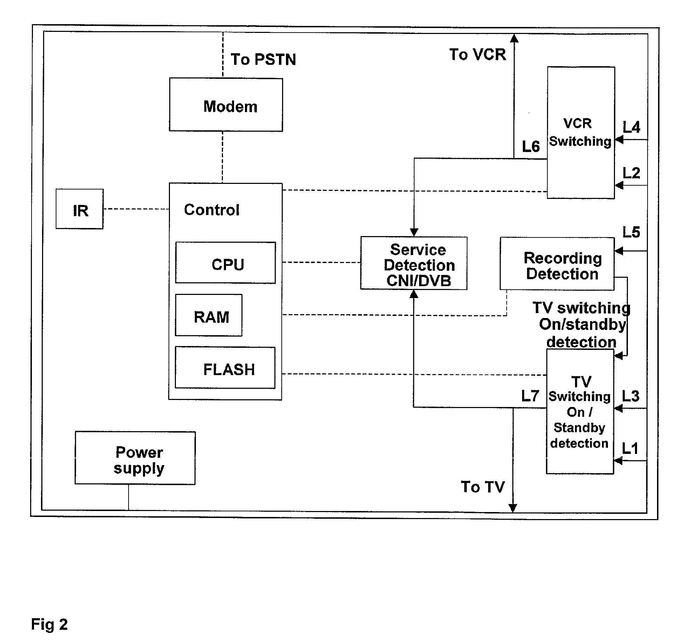

Figure 2 shows a potential architecture of the O-Box.

This unit detects if the corresponding device is switched on or whether it is in standby mode. For source devices (VCR, analogue STB, digital STB, ...) this is done via the composite video signal (CVBS) on PIN 20 of the EUROAV connector. For the television set it is done via PIN 19 of the EUROAV connector.

Further this unit switches the selected AV source to the television set. The IR codes for AV switching are captured by the IR receiver of the O-Box and perform the switching on the matrix of the O-Box. In this way the O-Box can capture which AV source is selected.

This unit switches the selected AV source to the VCR for recording purpose. The IR codes for AV switching are captured by the IR receiver of the O-Box and perform the switching on the matrix of the O-Box. In this way the O-Box can capture which AV source for recording is selected.

This unit detects whether the VCR is in recording mode. In recording mode there is a CVBS signal on PIN 19 of the EURO-AV and PIN 8 of the EURO-AV is in TV mode (0V - 2V).

This unit detects which service has been selected for viewing on the television set or which one has been selected for recording. In the case that the internal analogue tuner has been selected (television set or VCR) the detection is done via PIN 19 of the EURO-AV. In the case that an external AV source has been selected, the detection is done via PIN 20 of the EUROAV. Detection is done either via the CNI code in the teletext data or via the DVB triple that has been inserted by the digital set top box in the VBI.

The control unit contains the control algorithm of the O-Box. This part controls all the blocks listed above and collects the data. It consists of a controller with a CPU, RAM and Flash memory. The control program is stored in Flash and the collected data is stored as well in Flash memory, so as to be protected against electrical blackouts. The unit is connected to the PSTN and can be called by the operator of the O-Box. The operator can transfer the collected data to a server for analysis. Equally the operator can update the control program of the O-Boxes, in the case he needs to change it.

The control unit is able to decode infrared signals, so as to perform the matrix switching for viewing and recording source.

The purpose of the unit is to receive the infrared signal and to send it to the control unit.

The described invention shows the following advantages :
- Use of existing audiovisual devices for audience measurements. Only the digital STB needs a slight modification if CNI codes can't be inserted in the VBI.
- Use of existing broadcast chain. CNI code are widely used in the analogue television world for recording purposes (VPS and PDC). Adding a teletext PES for transporting just the CNI code needs only a very low bandwidth stream.
- Very easy audience measurement system set up. The system in based on EURO-AV connections and on a modem connection for data transmission a server.

## Claims

1. Television system including an audience measurement device connected to a television set having a number of selectable service and a digital data receiver, the digital receiver containing an unit for detecting which service has been selected for viewing on the television set, the audience measurement device having a memory in which the viewed service identifier are stored, **characterised in that** the digital data receiver transmits the service identifier in the Vertical Blanking Interval to the audience measurement device.

2. Television system according to the claim 1, **characterized in that** the Vertical Blanking Interval containing the service identifier is transmitted via a PERITEL connection.

3. Television system according to the claims 1 or 2, **characterized in that** the service identifier transmitted in the Vertical Blanking Interval is constituted by the DVB triple (original network ID, transport stream ID, service ID)

4. Television system according to the one of the claims 1 to 2, **characterized in that** the service identifier is transmitted in the Vertical Blanking Interval by a control program executed in the digital data receiver.

5. Television system according to claim 1 **characterized in that** the audience measurement device contains means for recognition of on/standby state of the television set, the on/standby state is determining by observing the composite output signal send by the television set.

6. Television system according to claim 1, said television system including a Video Cassette Recorder **characterized in that** the audience measurement device contains means for recognition of on/standby state of the Video Cassette Recorder, the on/standby state is determining by observing the composite output signal send by the Video C recorder.

7. Television system according to one of the claims 1 or 6 **characterized in that** the connection between audience measurement device comprises a link using the AV-Link protocol, this link allows to get information about a television set or a Video Cassette Recorder.

8. Television system according to one of the claims 1 or 7, said television system including a Video Cassette Recorder **characterized in that** the audience measurement device contains means for recognition of recording state of the Video Cassette Recorder, the on/standby state is determining by observing the composite output signal send by the Video Cassette Recorder.

9. Television system according to one of the claims 1 to 8, **characterized in that** the audience measurement device contains means for transferring the collected data recorded in the memory to a server, and means for updating an audience control program recorded in the audience measurement device.
